Europäisches Patentamt

European Patent Office

Office européen des brevets

(11) Publication number: 0 369 934
A2

# EUROPEAN PATENT APPLICATION

(21) Application number: 89730184.2

(22) Date of filing: 11.08.89

(51) Int. Cl.5: G06F 9/445

(30) Priority: 14.11.88 US 270204

(43) Date of publication of application:
23.05.90 Bulletin 90/21

(84) Designated Contracting States:
AT BE CH DE ES FR GB GR IT LI LU NL SE

(71) Applicant: COMPUADD CORPORATION
12303 Technology Blvd.
Austin Texas 78727(US)

(72) Inventor: Weber, Theodore Eric
8425 Cambria Drive
Austin Texas 78717(US)
Inventor: Griffith, Jenni Lee
1457 S. Meadow Drive
Austin Texas 78758(US)

(74) Representative: UEXKÜLL & STOLBERG
Patentanwälte
Beselerstrasse 4
D-2000 Hamburg 52(DE)

(54) User-configurable setups in non-volatile storage.

(57) A user-definable setup parameter, such as any of a plurality of hard disk drive physical data, may be used in setting up the operation of a computer. A non-volatile memory (30) is provided for storing at least one data record comprising a user-definable setup parameter. A terminal (36) displays this data record to the user. An input device (44) is operable to write user-defined changes to the data record by the user. A processor (14) is coupled to the non-volatile memory (30), the displayer (36) and the input device (44) and is operable to write the changes entered by the user to the non-volatile memory (30) and to thereafter set up the operation of the computer (10) according to parameters including the user-definable setup parameter. The invention allows the user to select among a plurality of stored setup parameters or to enter his own setup parameter according to the physical limitations of his own system.

FIG.1

## USER-CONFIGURABLE SETUPS IN NON-VOLATILE STORAGE

### TECHNICAL FIELD OF THE INVENTION

The present invention relates in general to computers, and more particularly relates to a method and apparatus for configuring a computer using user-definable parameters.

### BACKGROUND OF THE INVENTION

Microcomputers, particularly personal computers and professional computers, use a setup program stored in either a read-only memory (ROM) or on a diskette to properly configure the system BIOS (basic input/output system) in light of its various peripherals and boards. Conventional setup programs support each of a plurality of variations in terms of peripherals, boards and operating speeds and characteristics. For example, a conventional setup program allows the selection of any of a plurality of predetermined diskette sizes, disk types, video formats, memory sizes, error halts, cache controller states, the enablement or disablement of a shadow RAM, bus clock speeds and wait states.

A table of the options supported by the BIOS is conventionally stored in a ROM. During setup, tables are displayed at a terminal and the user steps through these tables and selects through a keyboard which of the variables he desires. These variables are then stored in a non-volatile random access memory, such as a battery-backed-up CMOS static random access memory (SRAM). The computer thereafter uses the configuration data stored in the CMOS SRAM in booting up.

Conventional setup programs, such as those written by Phoenix and Award (supply fuller company names and address), allow only the selection among various clocking modes that each has different sixteen-bit and eight-bit wait states and bus clock speeds. The user is unable to individually choose a bus clock speed and a number of wait states with a conventional setup program. Another problem with the conventional setup programs is that they will allow only the selection of one of a plurality of supported hard disk types, with data concerning the number of cylinders, number of heads, number of sectors and the cylinder to which precompensation is first applied stored for each disk type. If the user has a hard disk which does not exactly correspond to any of the supported disk types, he must choose the disk type closest to his own, even if it means the sacrifice of memory capacity. A need has therefore arisen for a method and apparatus allowing more user definition of a computer operating configuration.

### SUMMARY OF THE INVENTION

One aspect of the invention comprises apparatus for setting up the operation of a computer using user-definable parameters. A non-volatile memory is provided for storing at least one data record comprising a user-definable parameter. A displayer displays the data record to the user, and the user operates an input device for entering user-defined changes to the data record. A processor is coupled to the non-volatile memory, the displayer and the input device, and is operable to write the user-defined changes to the non-volatile memory and to set up the operation of a computer according to the parameters including the user-definable setup parameter.

In another aspect of the invention, the data record comprises a plurality of parameters relating to a hard disk type or index, where the hard disk may not be of a type that is supported by a BIOS hard disk table. A setup program according to the invention enables the user to enter a set of parameters tailored to the hard disk's specifications, and these parameters may be stored in the non-volatile memory after editing by the user. In this way, a hard disk drive controller can be configured by the user to accept a hard disk not of the various types explicitly supported by the BIOS.

In another aspect of the invention, the user is able to independently select the bus clock speed and the number of wait states for different classes of computer components. The independent selection of the bus clock speed and the number of wait states allows the user the optimum amount of flexibility in configuring his system to run as quickly as possible given its physical limitations.

### BRIEF DESCRIPTION OF THE DRAWINGS

Further aspects of the invention and their advantages will be discerned by reviewing the following detailed description in conjunction with the drawings in which:

FIGURE 1 is a highly schematic electrical block diagram of a microcomputer incorporating the invention;

FIGURE 2 is a diagram of a monitor screen display according to the invention; and

FIGURES 3a, 3b and 3c together are a flowchart illustrating a procedure according to the invention for specifying different setup parameters.

## DETAILED DESCRIPTION OF THE INVENTION

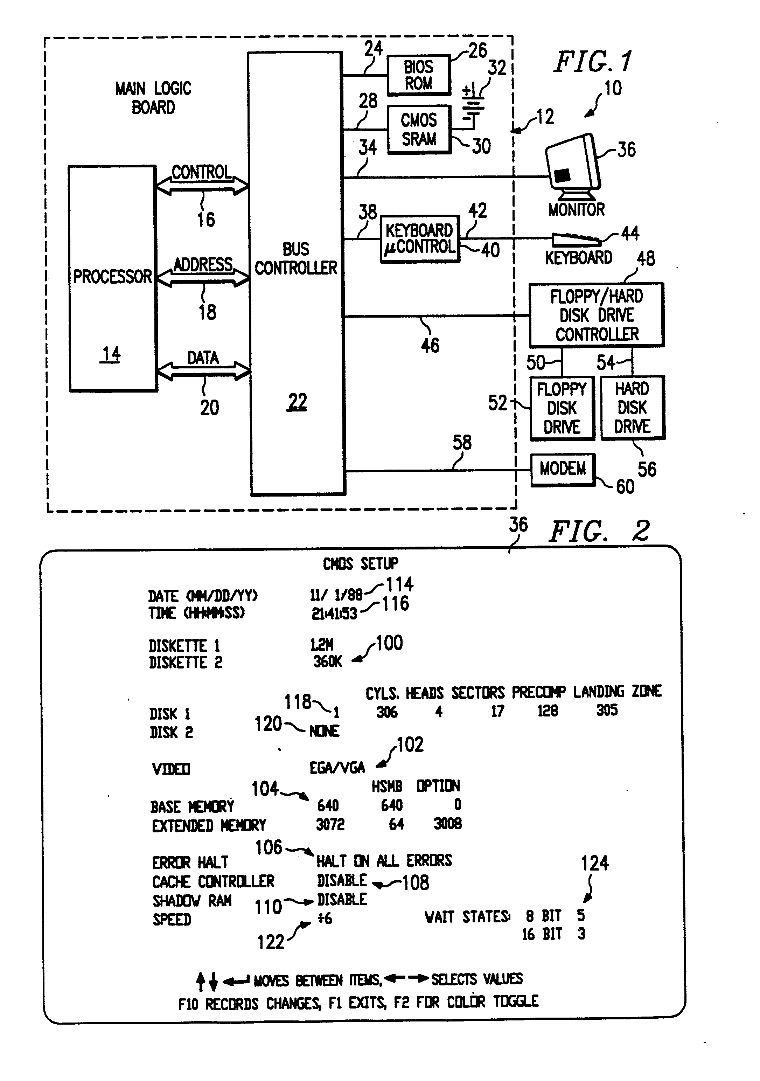

In FIGURE 1, a microcomputer is shown generally at 10 in a highly schematic block diagrammatic form. The microcomputer 10 may comprise an IBM PC-AT, a CompuAdd Standard Brand 286 or 386, or a computer of similar architecture, or any computer built around an INTEL 80286 or 80386 microprocessor or the like. These computer types are only illustrative and the invention has application to any computer wherein it is desired to configure the operation thereof by a user, and in particular any personal or professional computer.

FIGURE 1 illustrates only relevant parts of the computer 10. In general, the invention requires no hardware modification to any of the several computer types above listed except for the substitution of a modified BIOS ROM. In the illustrated embodiment, most of the relevant components are mounted on a main logic board indicated by the dashed enclosure 12. These components include a microprocessor 14 which can be, for example, an INTEL 80286 or 80386 microprocessor. The processor 14 is connected to a control bus 16, an address bus 18, and a data bus 20. Buses 16, 18 and 20 are in turn connected to a bus controller indicated schematically at 22. The bus controller 22 comprises several components, but its makeup is well known in the art and need not be gone into detail here.

The bus controller 22 controls access to a number of on-board and off-board components. For example, a data path 24 connects the bus controller 22 to a BIOS ROM 26 that provides support for the computer's operating system. A data path 28 connects the bus controller 22 to a non-volatile memory 30, which in the illustrated embodiment comprises a 128-byte CMOS SRAM backed up by a battery supply 32.

A data path 34 connects the bus controller 22 to a monitor 36, typically a CRT or LCD display. A data path 38 connects the bus controller 22 to a keyboard microcontroller 40, which in turn is connected by a data path 42 to a keyboard 44. Other input devices outside of keyboard 44 can be used to implement the invention, such as a mouse.

The bus controller 22 is further connected by a data path 46 to a floppy/hard disk drive controller 48. The controller 48 is in turn connected by a path 50 to a floppy disk drive 52 and by a path 54 to a hard disk drive 56. Finally, the bus controller 22 is connected in the illustrated embodiment by a path 58 to a modem 60.

The hard disk drive 56 may be any of several types supported by a BIOS hard disk table stored within ROM 26. Further, as will be explained in more detail below, it may be of any hard disk type defined by the user within the physical limitations of the disk drive controller 48. Since most controllers support only two hard disks, parameters for up to two user-defined hard disk types may be stored in the CMOS SRAM 30. However, more memory in the CMOS SRAM 30 may be allocated if desirable to support additional drives. Unlike the hard disk type data stored in the BIOS ROM 26, the parameters for the disk types stored in the non-volatile memory 30 can be changed by the user to match his own system.

Certain peripheral components such as the keyboard 44, the modem 60 and the floppy disk drive 52 require a bus clock speed that is relatively slow in comparison to the clock speed used for the processor 14. In general, the bus clock speed used for these slower peripheral devices is a predetermined fraction of the processor clock speed. The bus clock speed is in many cases either the processor clock speed divided by four, or the processor clock speed divided by six.

In the past, this bus clock speed has been set by the setup program stored in BIOS ROM 26 and only limited choices have been left to the user as to which clock speed he wishes to select. A non-customized setup program may establish the bus clock speed at the processor clock divided by four, but this bus clock speed may be too fast for certain peripheral components selected by the user. On the other hand, a non-customized setup program may establish the bus clock speed to be equal to the processor clock speed divided by six. Where the user selects circuit cards and peripheral components that are capable of running faster than this, less than the optimum performance of the device is obtained.

A principal aspect of the invention is therefore to allow the user to freely select among a plurality of bus clock speeds to best configure his system to the components chosen. This is done by establishing a clock speed field within the SRAM 30 for storing a clock speed divisor such as four or six. A setup program according to the invention allows the user to select among any of several different bus clock speeds.

Another clocking parameter is the number of wait states used in the processor clocking cycle. The devices coupled to buses 18 and 20 often may not be able to be accessed as fast as the processor 14 would otherwise be able to access them. This is particularly true for input/output devices such as the modem 60 or other synchronous/asynchronous devices (not shown) and the floppy disk drive 52. Normally, a typical control signal is fired after a predetermined number of clock cycles from the last control signal. A number of wait states may however be periodically inserted such that a succeeding control pulse will occur one or more clock cycles later, such that devices receiving the control pulse have the opportunity to catch up.

Conventional setup programs allow only a predetermined number of wait states to be selected for eight-bit option bus devices and sixteen-bit option bus devices. One of the aspects of the invention is the establishment of a field inside the SRAM 30 for the storage of the desired number of wait states. The number of wait states can be varied according to the configuration and options of the user's computer. This again allows the user more flexibility in the configuration of his own system. Where the user selects relatively fast input/output devices and optional cards, the selected number of wait states can be zero or some relatively low number. On the other hand, if there are relatively slow devices on the option bus, the user can select a high number of wait states such as four.

This allows a greater versatility than a conventional setup program which usually has a fixed number of wait states.

The software for changing any of the data records stored in SRAM 30 is incorporated into a setup application program. The setup program of the invention accesses the disk drive type data, the clock speed, the number of wait states and other setup parameters from the SRAM 30. The SRAM 30 is addressed as is any other register by a predetermined address. These setup data are then used in the operation of the system.

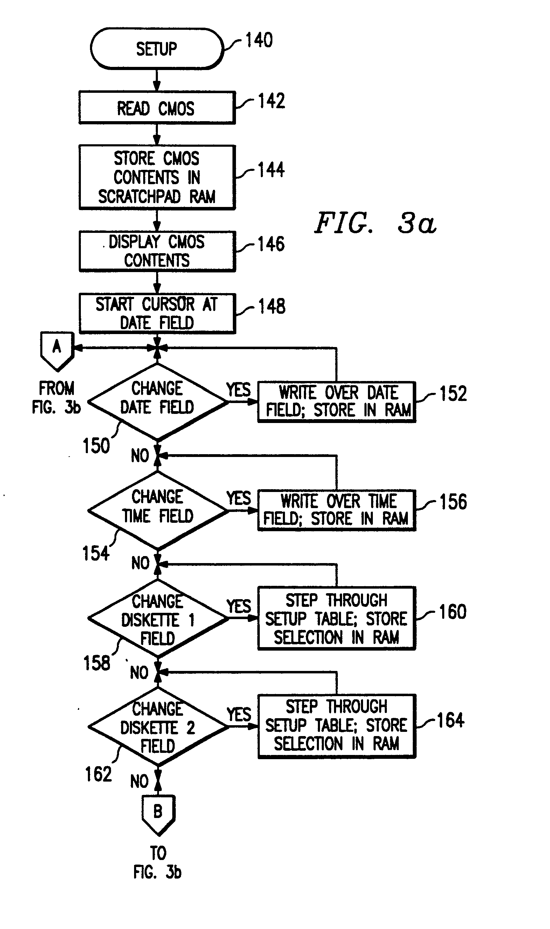

FIGURE 2 is an illustration of one possible screen menu used in conjunction with the setup program of the invention. The program of the invention allows the user to select among several configuration options that are stored within the ROM 26. For instance, the user may select among several predetermined capacities of floppy diskettes as shown at 100. The user can select between an EGA or VGA video option at 102. Options are provided with respect to the base memory and extended memory at 104, wherein the user can select the size of these memories, the amount of these memories connected to the high-speed memory bus (HSMB) and the remaining amount connected to the option bus (represented in FIGURE 1 by data paths 24, 28, 34, 38, 46 and 58). The setup program also allows the user to select whether there is to be a halt on all or just certain kinds of errors at 106, allows the disablement or enablement of a cache controller and a shadow RAM, respectively, at 108 and 110, the changing of date and time fields 114 and 116, the selection of hard disk types at 118 and 120, bus clock speed at 122 and wait state numbers at 124.

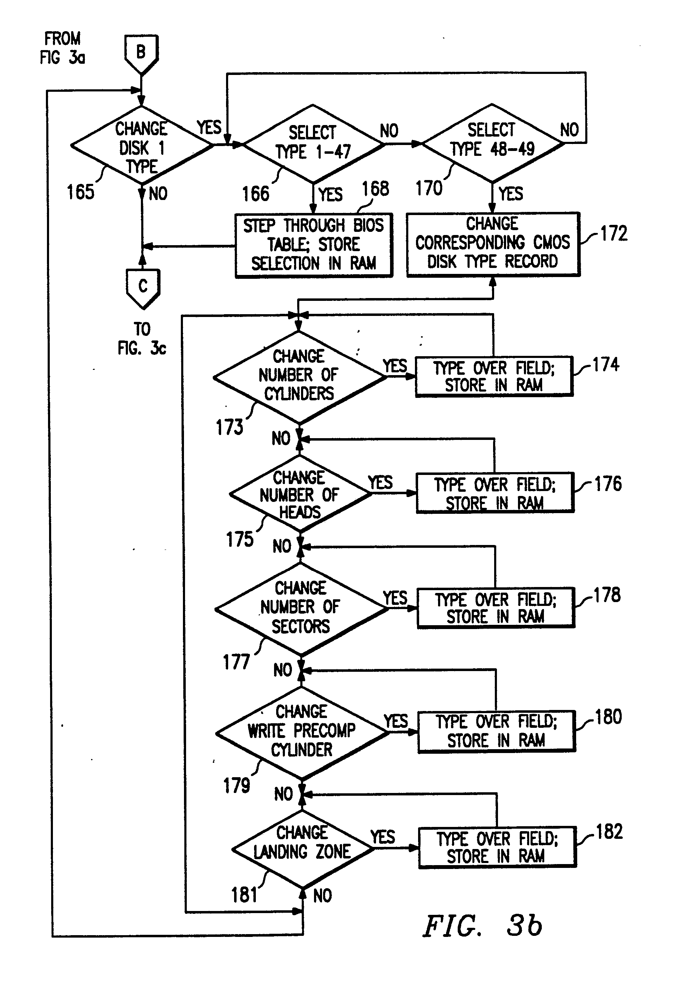

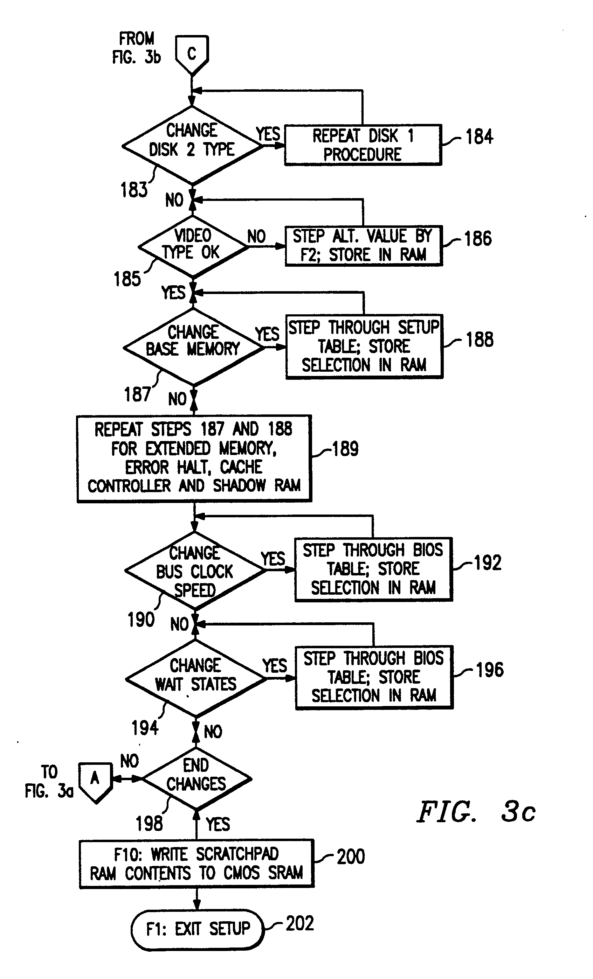

The operation of the invention can best be described in conjunction with FIGURES 3a 3c, which together constitute a flow chart of user and computer actions in setting up the operation of the computer. A setup program begins to be executed in a setup parameter selection mode at step 140. The setup program first reads the static RAM 30 to obtain the various parameters comprising the computer configuration stored therein at step 142. The parameters are stored in an allocated scratchpad portion of the computer's random access memory (RAM) at step 144. The parameters are also displayed on the display 36 in the manner shown in FIGURE 2 at step 146. A cursor of the monitor 36 is first placed at the display date field 114 at step 148.

The user may scroll down or up among the various data fields displayed using up or down arrows, with the exception of the disk type data 120. The user decides whether to change the date field at decision 150. If the displayed date is incorrect, the user can write over the date field at a step 152. The setup program allows the storage of the written-over date field in the scratch pad RAM. The user may then change the data field again at step 150, or may instead scroll down to the time field at step 154. The user may write over the displayed time field at step 156 in a manner similar to the writeover performed at step 152. Further changes to the time field are allowed back at step 154.

The user may scroll down further to a first floppy diskette field at step 158. If the specified size of the first floppy diskette is incorrect, the user can press either the right arrow key or the left arrow key to step through a table in the setup program at step 160 until a diskette size value is displayed that matches the diskette that the user is employing. The displayed diskette size is stored in the scratch pad RAM. Similar steps are performed at steps 162 and 164 for the size of a second diskette, if any.

As previously explained, the BIOS ROM 26 contains a table of preselected hard disk drive parameters. For example, a given BIOS ROM may have a table which defines forty-seven different hard disk configurations each by the number of cylinders in the hard disk, the number of read/write heads employed, the write pre-compensation, the number of sectors and, in an alternative embodiment, the landing zone. The table does not, however, exhaust the possibility of hard drive configurations. Hence, in prior computer systems, if the user's hard drive was not accurately described by a selection in the BIOS hard drive table, the user was forced to choose the predefined selection which most closely matched his hard drive.

Referring now to FIGURE 3b, the setup program displays a default hard disk configuration in step 165. If this disk type does not match the hard disk that the user is employing, the procedure branches to decision step 166. If the hard disk can be configured using one of the other pre-selected hard disk types, the user may select that configuration by stepping through the BIOS table and causing the desired index of the configuration to be displayed at step 168. For example, with a hard disk table having forty-seven pre-selected configurations, the user could step to enter any number between one and forty-seven.

If, however, the user's disk parameters are not adequately described by one of the forty-seven pre-selected disk configurations, the user may enter an index 48 or 49 in step 170. The setup program recognizes the index as referring to one of the configurations stored in the CMOS SRAM 30. In response to this index, the program will read the parameters from the SRAM 30 and display them at step 172. The user may change the parameters, namely, the number of cylinders, number of heads, write pre-compensation, number of sectors, and optionally the landing zone, to match the hard drive specification. In the preferred embodiment, the SRAM 30 allocates space for two user-configurable disk type records.

The user next determines whether the displayed disk type information is correct. In the illustrated embodiment, the first field of disk type data is the number of cylinders on the disk. The user inspects this number of cylinders and determines whether it is correct at step 173. If the number of cylinders is correct, the user types a new value over the field at step 174. The procedure then branches back to step 173, at which point the user can make further changes to this field of data. In a like manner, the user may change a number of disk drive heads at steps 175 and 176, a number of sectors of the hard disk at steps 177 and 178, the identity of the write precompensation cylinder at steps 179 and 180, and the landing zone cylinder number at steps 181 and 182. The setup program allows the user to step the cursor to the right or left (see FIGURE 2). A left arrow key selected while the cursor is at the cylinder field transfers the cursor over to the landing zone field, while a right arrow key stroked at the landing zone field shifts the cursor over to the cylinder field. Once the user is satisfied that the entered parameters conform to his particular hard disk, the user may branch back to step 165 to allow further changes as desired.

At steps 183 and 184, a similar process is performed for a second hard disk type. The user may next scroll down to a decision step 185, at which point the video type is inspected. If the video type is incorrect, the user may select the other video type available by pressing the F2 function key at step 186.

The user may next scroll down to the base memory data field 104. If the user determines that the specified base memory size is incorrect at step 187, he may step through a setup program table until a correct entry is displayed at step 188. Similar procedures are performed at step 189 for the extended memory, arrow halt, cache controller and shadow RAM parameters.

The user may next scroll down to data field 122 and inspect the bus clock speed at decision step 190. If the displayed bus clock speed is too fast or too slow for the user's configuration, he may change the displayed bus clock speed at step 192 by scrolling through another setup program table. In a similar manner, the user can scroll down to the wait state data fields at step 194 and inspect their values. If the number of wait states for either eight or sixteen bit devices is incorrect, another setup program table can be stepped through at a step 196 until correct values are displayed.

The setup program according to the invention allows the user to freely scroll up and down among the various displayed data fields. At step 198, the user may decide that the displayed setup parameters are now correct. He may also scroll back to the date field, as shown by the connector back to FIGURE 3a and decision 150. If the displayed information is correct, the user presses the F10 function key at step 200. The processor 14 will thereupon cause the contents of the scratch pad RAM to be written into SRAM 30. At a step 202, the user may press F1 to exit the setup program. The user may then boot up the computer 10 with the basic input/output software (BIOS) program (not shown), and the BIOS program will then set up the computer 10 in a configuration dictated by the parameters now stored with the SRAM 30.

In summary, a setup method and apparatus has been described that allows the user to enter certain custom setup data rather than choose among several predetermined alternatives of such data as stored in a ROM. This allows an optimum configuration of the system for the user's choice of equipment.

After changing the SRAM configuration parameters, the computer will load the proper configuration upon boot-up. In the case of the speed parameters, the BIOS startup routine will load parameters from the SRAM 30 into the proper registers (typically provided by a chip set, such as one sold by Chips and Technologies, Incorporated, 3050 Zanker Rd., San Jose, California 95134) to implement the proper bus clock rate and number of wait states.

In the case of the hard disk parameters, the BIOS will read the index from the SRAM 30. If the index is greater than the number of entries in its hard disk table, the BIOS will read from the appropriate location in the SRAM, where the desired record is located. The parameters are then transferred to the appropriate registers in the hard disk controller 48.

Conventional BIOS ROMs do not support the transfer of speed and hard disk parameters from the SRAM 30 to the various registers. However, the modification of the BIOS start-up procedure to perform the described routine can be implemented relatively easily by a programmer familiar with BIOS programs. Vendors of BIOS programs who have the capability to implement the described routine include Award Software Inc., 130 Knowles Dr., Los Gatos, California 95030, and Phoenix Technologies, Ltd., 320 Norwood Park South, Norwood, Massachusetts 02062.

While the invention has been described in conjunction with the above illustrated embodiment, the present invention and its advantages are not limited thereto, but only by the scope and spirit of the appended claims.

## Claims

1. Apparatus for setting up the operation of a computer using user-definable setup parameters, comprising:
a non-volatile memory for storing at least one data record comprising a user-definable setup parameter;
a visual output device for displaying said data record to the user;
an input device for writing user-defined changes to said data record by the user; and
a processor coupled to said non-volatile memory, said visual output device and said input device, said processor operable to write said user-defined changes to said non-volatile memory and to set up the operation of the computer according to parameters including said user-definable setup parameter.

2. The apparatus of Claim 1, wherein said non-volatile memory comprises a static random access memory backed by a battery power supply.

3. The apparatus of Claim 1, wherein said non-volatile memory stores a plurality of setup parameters including said user-definable setup parameter, said visual output device displaying said setup parameters to the user;
a read-only memory coupled to said processor, selected ones of said setup parameters chosen by the user from respective tables of alternative setup parameters stored in said read-only memory.

4. The apparatus of Claim 3, wherein said selected ones of said setup parameters include bus clock speed.

5. The apparatus of Claim 3, wherein said selected ones of said setup parameters include at least one wait state number.

6. The apparatus of Claim 1, and further comprising a read-only memory coupled to said processor for storing a setup program, wherein said setup program includes a plurality of tables of alternative data records, each record identified by an index and including a plurality of data fields;
said processor operable to display said data fields in said data record in response to the user entering an index matching a respective index for said data record, said processor further operable to enable the user to write data into a set of data fields comprising said data record stored in said non-volatile memory in response to the user entering an index not stored in said read-only memory.

7. In a computer, apparatus for configuring a disk drive controller by a user, comprising:
a non-volatile memory for storing at least one data record comprising disk physical data;
a visual output device for displaying said data record to the user;
an input device for entering user-defined changes to said data record by the user; and
a processor coupled to said non-volatile memory, said visual output device, said input device and said disk drive controller, said processor operable to write said changes to said non-volatile memory and to configure said disk drive controller according to said data record.

8. The apparatus of Claim 7, and further comprising a read-only memory coupled to said processor, a setup program stored in said read-only memory and including a table of alternative read-only data records each indexed by different respective type indices, said processor operable to display a selected one of said read-only data records in response to the user entering a type index matching an index of one of said read-only data records.

9. The apparatus of Claim 7, wherein said disk physical data include the number of cylinders of the disk.

10. The apparatus of Claim 7, wherein said disk physical data include a number of heads.

11. The apparatus of Claim 7, wherein said disk physical data include a number of sectors present on the disk.

12. Apparatus for selecting at least one clocking parameter for the setup of the operation of a computer, comprising:
a non-volatile memory for storing at least one data record comprising a clocking parameter;
a displayer for displaying said data record to the user;
an input device for selecting one of a plurality of predetermined clocking parameters;
a read-only memory for storing said plurality of predetermined clocking parameters; and
a processor coupled to said non-volatile memory, said displayer, said input device and said read-only memory, said processor operable to successively display ones of said clocking parameters on said displayer, to write one of the displayed clocking parameters selected by the user to said non-volatile memory, and to set up the operation of the computer according to parameters including said clocking parameter stored in said non-volatile memory.

13. The apparatus of Claim 12, wherein said clocking parameter comprises a bus clock rate.

14. The apparatus of Claim 12, wherein said clocking parameter comprises a wait state number.

15. A method for setting up the operation of a computer, comprising the steps of:
reading a user-definable setup parameter from a non-volatile memory;
displaying the parameter to a user;
changing the displayed parameter by entering a user-defined parameter value by the user;
writing the changed parameter to the non-volatile memory; and
executing an input/output software program to begin computer operation, said step of executing including the substep of reading the user-definable setup parameter from the non-volatile memory.

*FIG. 1*

MAIN LOGIC
BOARD

CONTROL
16

ADDRESS
18

DATA
20

PROCESSOR
14

BUS
CONTROLLER
22

24
BIOS
ROM
26
32

28
CMOS
SRAM
30

34

38
KEYBOARD
μCONTROL
42
40

46

FLOPPY/HARD
DISK DRIVE
CONTROLLER
48

50
FLOPPY
DISK
DRIVE
52

54
HARD
DISK
DRIVE
56

58
MODEM
60

10

12

MONITOR
36

KEYBOARD
44

---

36  *FIG. 2*

CMOS SETUP

DATE (MM/DD/YY)          11/ 1/88  ~114
TIME (HH:MM:SS)          21:41:53  ~116

DISKETTE 1               1.2M      ~100
DISKETTE 2               360K

                         CYLS. HEADS SECTORS PRECOMP LANDING ZONE
          118~1
DISK 1                   306    4      17    128     305
DISK 2    120~NONE

                         ~102
VIDEO                    EGA/VGA

          104~           HSMB   OPTION
BASE MEMORY              640    640    0
EXTENDED MEMORY          3072   64     3008

          106~
ERROR HALT              HALT ON ALL ERRORS          124
CACHE CONTROLLER        DISABLE ~108
SHADOW RAM    110~DISABLE
SPEED                   ÷6          WAIT STATES: 8 BIT 5
          122~                                  16 BIT 3

↑↓ ←┘ MOVES BETWEEN ITEMS, ←→ SELECTS VALUES
F10 RECORDS CHANGES, F1 EXITS, F2 FOR COLOR TOGGLE

```
                    ┌─────────────┐
                    │    SETUP    │── 140
                    └──────┬──────┘
                           │
                    ┌──────▼──────┐
                    │  READ CMOS  │── 142
                    └──────┬──────┘
                           │
                    ┌──────▼──────┐
                    │ STORE CMOS  │
                    │ CONTENTS IN │── 144
                    │SCRATCHPAD RAM│
                    └──────┬──────┘
                           │
                    ┌──────▼──────┐
                    │.DISPLAY CMOS│── 146
                    │  CONTENTS   │
                    └──────┬──────┘
                           │
                    ┌──────▼──────┐
                    │START CURSOR AT│── 148
                    │  DATE FIELD  │
                    └──────┬──────┘
```

*FIG. 3a*

```
      ╱╲                    ┌──────────────┐
 A   ╱CHANGE╲  YES          │WRITE OVER DATE│── 152
    ╱ DATE FIELD╲─────────► │FIELD; STORE IN RAM│
FROM ╲        ╱             └──────────────┘
FIG. 3b╲     ╱
    150  ╲ ╱ NO
          ▼
      ╱╲
     ╱CHANGE╲   YES         ┌──────────────┐
    ╱TIME FIELD╲──────────► │WRITE OVER TIME│── 156
     ╲        ╱             │FIELD; STORE IN RAM│
  154 ╲     ╱               └──────────────┘
       ╲  ╱ NO
        ▼
      ╱╲
     ╱CHANGE ╲  YES         ┌──────────────┐
    ╱DISKETTE 1╲──────────► │STEP THROUGH   │── 160
    ╲  FIELD  ╱             │SETUP TABLE; STORE│
  158 ╲     ╱               │SELECTION IN RAM│
       ╲  ╱ NO              └──────────────┘
        ▼
      ╱╲
     ╱CHANGE ╲  YES         ┌──────────────┐
    ╱DISKETTE 2╲──────────► │STEP THROUGH   │── 164
    ╲  FIELD  ╱             │SETUP TABLE; STORE│
  162 ╲     ╱               │SELECTION IN RAM│
       ╲  ╱ NO              └──────────────┘
        ▼
        B
        │
       TO
     FIG. 3b
```

FIG. 3b

FROM
FIG. 3b  C

CHANGE
DISK 2 TYPE — 183 — YES → REPEAT DISK 1 PROCEDURE — 184

NO

VIDEO
TYPE OK — 185 — NO → STEP ALT. VALUE BY F2; STORE IN RAM — 186

YES

CHANGE
BASE MEMORY — 187 — YES → STEP THROUGH SETUP TABLE; STORE SELECTION IN RAM — 188

NO

REPEAT STEPS 187 AND 188 FOR EXTENDED MEMORY, ERROR HALT, CACHE CONTROLLER AND SHADOW RAM — 189

CHANGE
BUS CLOCK SPEED — 190 — YES → STEP THROUGH BIOS TABLE; STORE SELECTION IN RAM — 192

NO

CHANGE
WAIT STATES — 194 — YES → STEP THROUGH BIOS TABLE; STORE SELECTION IN RAM — 196

NO

TO
FIG. 3a  A ← NO — END CHANGES — 198

YES

F10: WRITE SCRATCHPAD RAM CONTENTS TO CMOS SRAM — 200

F1: EXIT SETUP — 202

FIG. 3c